Europäisches Patentamt

European Patent Office

Office européen des brevets

(19)

(11) Numéro de publication: **0 026 126**

**A1**

(12)

# DEMANDE DE BREVET EUROPEEN

(21) Numéro de dépôt: **80401267.2**

(22) Date de dépôt: **05.09.80**

(51) Int. Cl.³: **G 01 T 3/04**

(30) Priorité: **21.09.79 FR 7923514**

(43) Date de publication de la demande:
**01.04.81 Bulletin 81/13**

(84) Etats Contractants Désignés:
**CH DE FR GB IT LI SE**

(71) Demandeur: **COMMISSARIAT A L'ENERGIE ATOMIQUE Etablissement de Caractère Scientifique Technique et Industriel**
**B.P. 510**
**F-75752 Paris Cedex 15(FR)**

(72) Inventeur: **Roche, Michel**
**12, rue de Saulx-Tavannes**
**F-21000 Dijon(FR)**

(74) Mandataire: **Mongredien, André et al,**
**c/o Brevatome 25, rue de Ponthieu**
**F-75008 Paris(FR)**

(54) Procédé de mesure d'un flux neutronique continu et appareil pour la mise en oeuvre de ce procédé.

(57) L'invention concerne un procédé de mesure d'un flux neutronique continu, ainsi qu'un appareil de mesure pour la mise en oeuvre de ce procédé.

On dispose dans le flux neutronique une sonde (10) comprenant une première partie définissant une enceinte (11) et une seconde partie (14) disposée à l'intérieur de l'enceinte et séparée de celle-ci par un milieu (18) dont la conductance thermique est connue, l'une (14) desdites parties étant réalisée au moins partiellement en matériau fissile, et on mesure à l'équilibre la différence de températures entre les deux parties pour en déduire la puissance dégagée par le matériau fissile, puis le flux neutronique.

Application à la mesure du flux neutronique notamment dans le coeur des réacteurs nucléaires.

FIG.1

EP 0 026 126 A1

L'invention concerne un procédé de mesure d'un flux neutronique continu, ainsi qu'un appareil de mesure permettant de mettre en oeuvre ce procédé.

Il existe de nombreux dispositifs permettant de mesurer des flux neutroniques. Ces dispositifs font généralement appel à des réactions nucléaires donnant lieu à l'émission de particules (rayonnements $\alpha$ ou $\beta$, fragments de fission, etc...) que l'on transforme en signaux électriques, soit en mesurant le débit de charge, soit en ionisant un gaz approprié dont on mesure la conductibilité de façon continue ou impulsionnelle. Parmi les dispositifs rentrant dans cette dernière catégorie, on citera notamment les compteurs à trifluorure de bore ($BF_3$) et les chambres à fission.

Dans le cas particulier des mesures à très haut flux, telles que les mesures effectuées dans le coeur des réacteurs nucléaires, les moyens de mesure sont très réduits et se limitent pratiquement aux chambres à fission en régime continu.

Parmi les dispositifs de mesure de flux neutronique connus, aucun ne permet de mesurer directement la puissance spécifique dégagée, bien que cette puissance constitue un paramètre fondamental pour la gestion du coeur des réacteurs nucléaires. En outre, les dispositifs faisant appel à des réactions nucléaires exigent la connaissance du spectre neutronique. Enfin, dans le cas d'une chambre à fission, il est nécessaire d'étalonner la chambre et la présence du rayonnement gamma est fortement perturbatrice.

Par ailleurs, on sait mesurer des flux neutroniques intenses pulsés en utilisant des résistances fissiles préalablement étalonnées dans un four. A cet effet, on place la résistance dans le flux neutronique et on en mesure la résistance afin d'en déduire la tem-

B 6730-3 GP

pérature. Il est alors possible de calculer le nombre de fissions correspondant, à condition que la résistance fissile soit soumise à une impulsion neutronique de durée suffisamment courte pour que la résistance puisse être considérée comme isolée thermiquement. La technique utilisée est celle de la calorimétrie adiabatique, puisque les échanges thermiques sont considérés comme nuls en raison de la rapidité de la mesure. Un tel procédé de mesure est décrit dans l'article de Messieurs M. ROCHE, J. MORIN, E. POUSSIER, G. COTTIN et J. DAVID du Commissariat à l'Energie Atomique, intitulé "Utilisation de résistances fissile pour la mesure de flux neutroniques intenses pulsés", publié dans la revue "Nuclear Instruments and Methods" 159 (1979), p. 439 à 447.

Comme on vient de le voir, le procédé de mesure décrit dans cet article utilise la technique de la calorimétrie adiabatique rendue possible par la rapidité de la mesure dans le cas des flux neutroniques pulsés ( de durée inférieure à $1/10^e$ de seconde). Cependant, ce procédé ne peut pas s'appliquer à la mesure de flux neutroniques continus, telle que celle qui est effectuée dans le coeur des réacteurs nucléaires, car les échanges thermiques ne peuvent pas alors être considérés comme nuls. Le procédé ne permet pas non plus de mesurer la puissance spécifique dégagée.

La présente invention a pour objet un procédé de mesure de flux neutroniques continus permettant de réaliser des mesures à très haut flux, telles que celles qui doivent être effectuées dans le coeur des réacteurs nucléaires en effectuant une mesure absolue de la puissance dégagée, c'est-à-dire de façon directe et précise, sans qu'il soit nécessaire de connaître le spectre neutronique. L'invention a également pour objet un appareil pour la mise en oeuvre de ce procédé.

B 6730-3 GP

A cet effet, il est proposé de faire appel à la technique de la calorimétrie "à flux" qui, contrairement à la technique de la calorimétrie adiabatique, ne cherche pas à annuler le flux de fuite, mais au contraire à l'utiliser pour mesurer la puissance dégagée à l'équilibre par le calorimètre. Il est également proposé d'utiliser les enseignements de l'article mentionné précédemment pour effectuer la mesure de température en mesurant la résistance électrique d'une source chaude constituée par une résistance fissile ou par une résistance inerte chauffée de façon indirecte par une feuille de matériau fissile, cette résistance ayant été préalablement étalonnée. Grâce à l'utilisation de la calorimétrie à flux, il n'est plus nécessaire que la résistance électrique soit isolée thermiquement, puisqu'on utilise au contraire ce défaut d'isolation pour effectuer la mesure. Il est donc possible de mesurer ainsi des flux neutroniques continus avec un appareil dont le temps de réponse est excellent grâce à la mesure de température par mesure d'une résistance électrique.

Ainsi, il est proposé conformément à l'invention, un procédé de mesure d'un flux neutronique continu, caractérisé en ce qu'il consiste :

- à disposer dans le flux neutronique une sonde comprenant une première partie définissant une enceinte et une seconde partie disposée à l'intérieur de l'enceinte et constituée par une résistance électrique préalablement étalonnée afin d'en connaître la variation en fonction de la température, la résistance électrique étant séparée de l'enceinte par un milieu dont la conductance thermique est connue et l'une desdites parties étant réalisée au moins partiellement en matériau fissile alors que l'autre partie est réalisée en matériau inerte,

B 6730-3 GP

- à mesurer ladite résistance électrique pour connaître la température de la seconde partie et à mesurer la température de la première partie de la sonde, et

- à déduire de la différence des températures mesurée à l'équilibre entre les deux parties de la sonde et de la valeur correspondante de la conductance thermique du milieu, la puissance dégagée en continu par la partie réalisée en matériau fissile.

Le procédé de mesure selon l'invention utilise donc une méthode calorimétrique à flux, dans laquelle on ne mesure pas l'élévation de température d'une résistance fissile recevant une bouffée de neutrons, comme dans l'article sus-mentionné, mais la différence de températures existant à l'équilibre entre une partie fissile et une partie inerte placées dans un flux neutronique continu. Il permet donc de mesurer directement un flux neutronique continu au moyen d'un calorimètre à fuites contrôlées, par conduction thermique de la chaleur provenant, de préférence, d'une résistance fissile.

Selon une première variante de réalisation de l'invention, une deuxième résistance électrique préalablement étalonnée afin d'en connaître la variation en fonction de la température peut alors être connectée électriquement à l'enceinte et décalée axialement par rapport au matériau fissile, de telle sorte que l'on mesure cette deuxième résistance pour connaître la température de l'enceinte.

Selon une deuxième variante de réalisation de l'invention, on corrige les variations de température de l'enceinte en associant à la résistance électrique un dispositif de correction, tel qu'une thermistance, sensible à la température de l'enceinte.

L'invention concerne également un appareil de mesure d'un flux neutronique selon ce procédé, cet appareil étant caractérisé en ce qu'il comprend une sonde comportant une première partie définissant une enceinte, et une seconde partie disposée à l'intérieur de l'enceinte et constituée par une résistance électrique, cette résistance étant séparée de l'enceinte par un milieu dont la conductance thermique est connue, et des moyens pour mesurer la différence de températures entre les deux parties de la sonde, ces moyens comprenant des moyens pour mesurer la valeur de ladite résistance.

On décrira maintenant, à titre d'exemple non limitatif, différentes variantes de réalisation de l'invention en se référant aux dessins annexés dans lesquels :

- la figure 1 est une vue en coupe longitudinale schématique d'un appareil de mesure de flux neutronique continu réalisé conformément aux enseignements de la présente invention,

- la figure 2 est une courbe établie par étalonnage et représentant les variations de la résistance fissile du dispositif représenté sur la figure 1 en fonction de la température,

- la figure 3 est une courbe d'étalonnage représentant les variations de la puissance dégagée par la résistance fissile du dispositif représenté sur la figure 1 en fonction de la température de cette résistance, établie pour différentes valeurs de la température de l'enceinte externe,

- la figure 4 est une courbe déduite des courbes des figures 2 et 3 et représentant les variations de la puissance dégagée par la résistance fissile en fonction de la valeur de cette résistance pour différentes valeurs de la température de l'enceinte externe du dispositif,

B 6730-3 GP

- la figure 5 est une vue similaire à la figure 1 représentant une variante du dispositif de mesure selon l'invention,

- la figure 6 est une vue comparable aux figures 1 et 5 et représentant une autre variante du dispositif selon l'invention, et

- la figure 7 est une vue comparable aux figures 1, 5 et 6 et représentant encore une autre variante du dispositif de mesure selon l'invention.

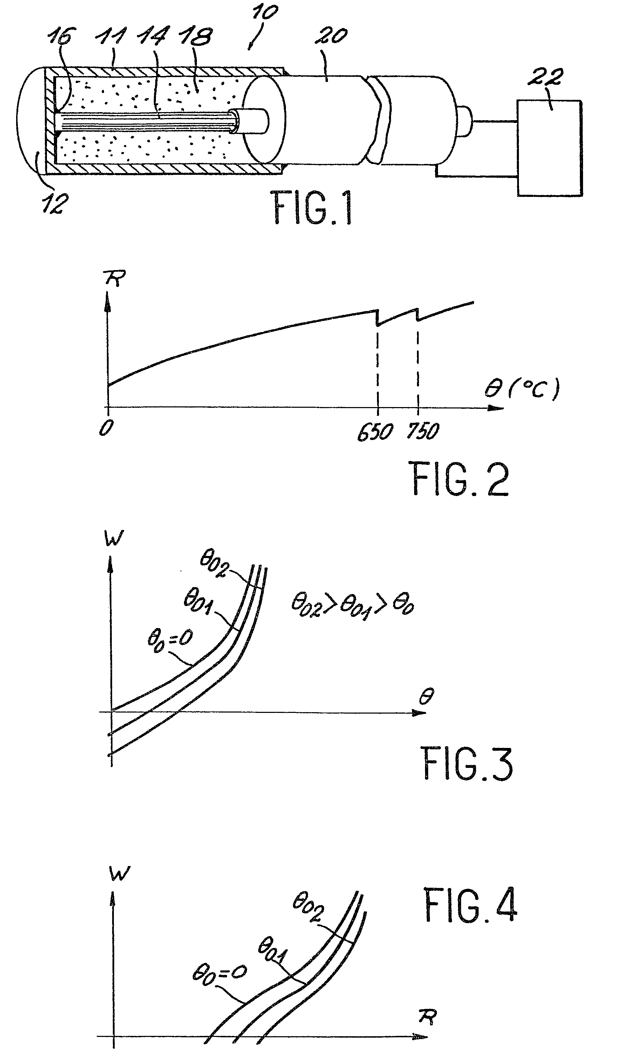

Le dispositif de mesure du flux neutronique continu représenté sur la figure 1 comprend une sonde 10 et des moyens de mesure 22. La sonde 10 comporte une enceinte 11, de préférence de forme tubulaire, fermée à l'une de ses extrémités par une paroi 12 et à son autre extrémité par un câble coaxial 20. L'enceinte 11 est réalisée en un matériau bon conducteur de l'électricité et inerte tel qu'un métal non fissile. Une résistance fissile, présentant dans le mode de réalisation décrit la forme d'un fil 14, est disposée à l'intérieur de l'enceinte 11, de préférence coaxialement à celle-ci et connectée électriquement à la paroi 12, par exemple par une soudure 16. Le fil 14 est réalisé de préférence en un alliage métallique comprenant une teneur plus ou moins élevée de matière fissile telle que l'uranium. Bien entendu, le fil 14 peut être remplacé par tout autre élément en matériau fissile tel qu'une pastille de céramique réalisée par exemple en oxyde ou en carbure de matériau fissile.

Le fil 14 est séparé de l'enceinte 11 par un milieu 18 qui constitue un isolant électrique et dont la conductibilité thermique détermine la sensibilité de la sonde 10. Le milieu 18 est également choisi en tenant compte d'autres critères tels que la résistance mécanique, la tenue à la pression ou à la température, la résistance aux rayonnements, etc... Pratiquement, et à titre d'exemple, le milieu 18 peut être constitué par de l'alumine lorsqu'on désire réaliser un dispositif de faible sensibilité et par le vide lorsqu'on désire réaliser un dispositif très sensible.

Le conducteur interne du câble coaxial 20 relie électriquement le fil 14 aux moyens de mesure 22, alors que le conducteur externe de ce câble relie électriquement l'enceinte 11 aux moyens de mesure 22. Ces derniers sont destinés à mesurer la résistance du fil 14 et ils peuvent être constitués à cet effet par un ohmmètre 22. Le circuit électrique ainsi formé comprend une source de courant, la résistance constituée par le fil 14 et des moyens pour afficher la valeur de cette résistance.

Avant de procéder à la mesure proprement dite, on détermine par un étalonnage statique la variation de la résistance R du fil 14 en fonction de sa température $\theta$ , en le plaçant dans un four.

La figure 2 représente une courbe d'étalonnage de ce type, dans le cas où le fil 14 est constitué par un alliage d'uranium à 0,2% de vanadium. Les discontinuités apparaîssant sur cette courbe aux environs de 650°C et de 750°C, correspondent aux changements de phase cristalline.

Lorsque la sonde de mesure 10 selon l'invention est placée dans un flux neutronique, les fissions qui en résultent dans le fil 14 élèvent la température $\theta$ de ce fil qui devient ainsi supérieure à la température $\theta_0$ de l'enceinte 11, cette température $\theta_0$ étant sensiblement égale à celle du milieu ambiant. Si la conductance thermique du milieu 18 est désignée par C, la puissance W dégagée dans la résistance fissile par les fissions générées en son sein par les neutrons incidents s'exprime à l'équilibre par la relation :

$$W = C (\theta - \theta_0) \qquad (1)$$

B 6730-3 GP

En pratique, cette relation doit être corrigée afin de tenir compte de la perte d'énergie superficielle due aux produits de fission qui sortent du milieu fissile en périphérie du fil et déposent leur énergie dans le milieu 18. Cette correction dépend à la fois de la nature du milieu 18 et des caractéristiques du fil 14. Elle est généralement d'environ 5% pour un fil de 0,1 mm de diamètre dont la résistance est de quelques ohms et dont la longueur est de quelques centimètres, ce fil étant placé dans le vide.

Comme l'illustre la figure 3, les variations de la puissance W en fonction de la température $\Theta$ peuvent être déterminées par étalonnage en laboratoire pour différentes valeurs de la température $\Theta_0$ de l'enceinte 11.

A partir des deux courbes d'étalonnage thermique des figures 2 et 3, on peut établir, comme l'illustre la figure 4, les courbes de variations de la puissance W dégagée par le fil en fonction de la résistance R de ce fil, pour différentes valeurs de la température $\Theta_0$ de l'enceinte.

Dans la variante de réalisation de l'invention représentée sur la figure 1, la mesure proprement dite s'effectue en plaçant la sonde 10 dans le flux neutronique continu que l'on souhaite mesurer, c'est-à-dire par exemple dans le coeur d'un réacteur nucléaire. La mesure de la température $\Theta_0$ de l'enceinte 10 ou du milieu ambiant s'effectue au moyen d'un dispositif de mesure classique (non représenté) tel qu'un thermomètre ou qu'un thermocouple. On détermine alors sur la figure 4, la courbe de variation de la puissance W en fonction de la résistance R correspondant à cette température $\Theta_0$. Lorsque le flux neutronique est sensiblement constant, un équilibre thermique s'établit de telle sorte que la résistance R du fil 14 mesurée au moyen de l'ohmmètre 22 se stabilise. Il est alors possible, grâce à la courbe de la figure 4, d'en déduire immédiatement la valeur de la puissance W dégagée par le fil 14.

Bien entendu, les courbes d'étalonnage données aux figures 2, 3 et 4 ne sont nullement limitatives. Ainsi, l'ohmmètre 22 peut être gradué directement en températures au cours d'un étalonnage préalable. Les courbes des figures 2 et 4 deviennent alors inutiles. La valeur de la température affichée par l'ohmmètre 22 peut aussi être utilisée pour calculer directement la valeur de la puissance dégagée par le fil à partir de la relation (1) mentionnée précédemment. La conductance thermique C du milieu 18 est alors déterminée auparavant, par exemple par étalonnage.

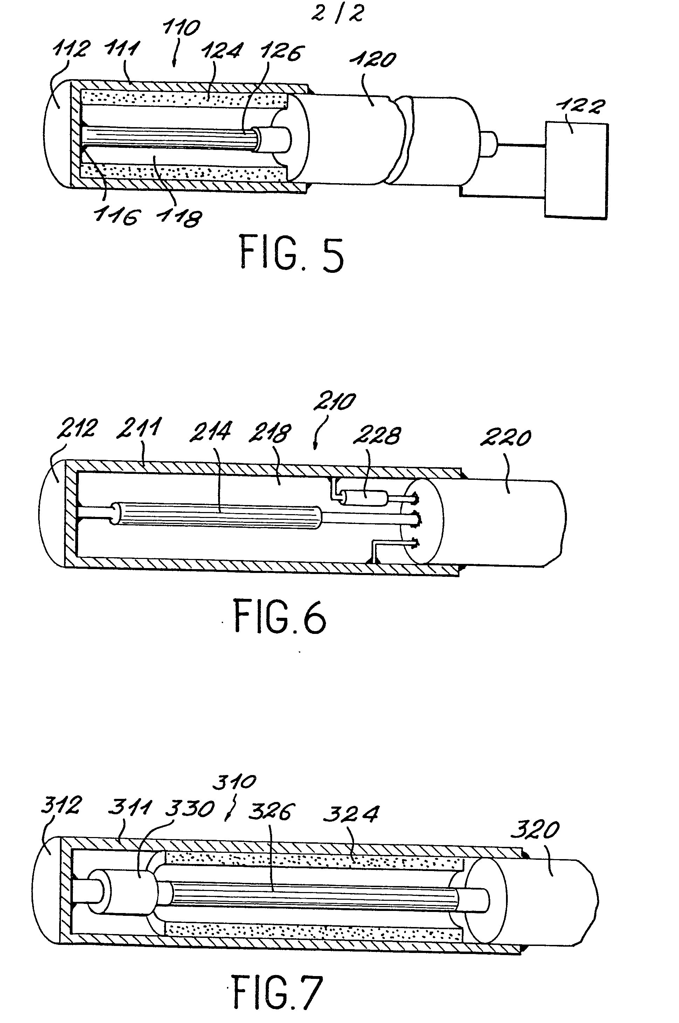

Dans la variante de réalisation représentée sur la figure 5, l'appareil de mesure de flux neutronique diffère de l'appareil représenté sur la figure 1 par la structure de la sonde. Plus précisément, la sonde 110 de l'appareil de mesure représenté sur la figure 5 comprend une enceinte 111, de forme tubulaire, fermée à l'une de ses extrémités par une paroi 112 et à son autre extrémité par un câble coaxial 120. Une feuille de matériau fissile 124 est enroulée à l'intérieur de la partie tubulaire de l'enceinte 111.

Une résistance inerte 126 est disposée coaxialement à l'intérieur de l'enceinte 111 et de la feuille 124, et elle est reliée à l'une de ses extrémités, par exemple par une soudure 116, à la paroi 112 de l'enceinte 111. Comme dans la variante représentée sur la figure 1, un milieu électriquement isolant 118 est disposé entre la feuille 124 et la résistance inerte 126. Le conducteur interne du câble coaxial 120 relie la résistance 126 à un ohmmètre 122, et le conducteur externe du câble 120 relie l'enceinte 111 à l'ohmmètre 122 de façon à définir un circuit de mesure fermé.

L'étalonnage de l'appareil représenté sur la figure 5 et la mesure proprement dite s'effectuent de la même manière que pour l'appareil représenté sur la figure 1. La seule différence entre ces deux variantes réside dans le fait que la résistance 126 est chauffée indirectement par le matériau fissile au travers du milieu 118. Le milieu intermédiaire 118 assure comme précédemment la fonction de conduction thermique et il doit être facilement traversé par les produits de fission. Pour cette raison, on choisira de préférence un gaz inerte ou le vide.

La variante de la figure 5 présente certains avantages techniques par rapport à la variante de la figure 3. Ces avantages sont liés au découplage des fonctions de résistance et de fission. Il est ainsi possible d'éviter le problème posé par les changements de phase cristalline et d'améliorer la linéarité et la dynamique de l'appareil.

La température $\theta$ de la résistance 126 que l'on mesure comme précédemment au moyen de l'ohmmètre 122 est reliée à la température $\theta_U$ qu'aurait une résistance fissile de chaleur spécifique $C_U$ réalisée en matériau lourd, tungstène, tantale, platine, etc... par la relation :

$$\theta = \frac{C_U}{C} \times \theta_U \qquad (2)$$

où C désigne la chaleur spécifique de la résistance inerte.

Cette relation, rigoureuse pour une résistance d'épaisseur nulle, doit être corrigée en ajoutant à la température $\theta$ mesurée une quantité $\Delta\theta$ variable selon la géométrie de la sonde et l'épaisseur de la résistance. Pratiquement, afin que cette quantité soit calculable, il faut que l'épaisseur de la résistance soit très faible et que la géométrie de la sonde soit aussi simple que possible. A cet effet, on choisira de préférence une sonde à géométrie cylindrique ou plane.

Dans les deux variantes de réalisation représentées aux figures 1 et 5, la température de l'enceinte de la sonde de mesure est mesurée séparément au moyen d'un dispositif classique (non représenté). Au contraire, dans la variante de réalisation représentée sur la figure 6, la température de l'enceinte est également mesurée par la sonde, de telle sorte que l'appareil de mesure peut afficher directement la différence des températures entre la résistance et l'enceinte.

La sonde 210 représentée sur la figure 6 est du même type que la sonde représentée sur la figure 1, c'est-à-dire qu'elle se compose d'une enceinte métallique inerte 211 de forme cylindrique fermée à ses deux extrémités opposées par une cloison 212 et par un câble coaxial 220 reliant la sonde à des moyens de mesure (non représentés), tels qu'un ohmmètre. Une résistance fissile 214 est disposée coaxialement à l'intérieur de l'enceinte 211 et reliée électriquement par ses deux extrémités respectivement à la cloison 212 et au conducteur électrique interne du câble coaxial 220. Le conducteur externe du câble 220 est relié électriquement à l'enceinte 211. Enfin, un milieu intermédiaire 218 électriquement isolant est disposé entre l'enceinte 211 et la résistance 214.

Conformément à la variante de réalisation de la figure 6, une résistance inerte 228 est également disposée à l'intérieur de l'enceinte 211 et connectée électriquement à la paroi cylindrique de celle-ci et à un second conducteur électrique interne du câble coaxial 220. La résistance 228 est décalée axialement par rapport à la résistance fissile 214, de telle sorte que la chaleur diffusée sensiblement radialement par cette dernière sous l'effet des fissions provoquées par le

B 6730-3 GP

flux neutronique incident n'a pas de conséquence directe sur la température de la résistance 228.

Grâce au dispositif de mesure représenté sur la figure 6, il est possible comme dans le cas du dispositif représenté sur la figure 1 de mesurer directement au moyen d'un ohmmètre la valeur de la résistance fissile 14 ou de la température $\theta$ correspondante. De plus, ce dispositif permet de mesurer simultanément la valeur de la résistance inerte 228 ou de la température $\theta_0$ de l'enceinte 211 correspondante. Afin de faciliter la mesure, il est possible au moyen d'un montage approprié d'afficher directement sur l'ohmmètre la différence entre les températures $\theta$ de la résistance fissile et $\theta_0$ de l'enceinte.

Dans la variante de réalisation représentée sur la figure 7, la mesure de la température $\theta_0$ de l'enceinte est supprimée. En effet, on corrige automatiquement toute variation de cette température. Les variations de la température mesurées correspondent alors aux variations de la différence de températures entre la résistance et l'enceinte.

A cet effet, le dispositif 310 représenté sur la figure 7, qui est par ailleurs sensiblement du même type que le dispositif représenté sur la figure 5, comprend une thermistance 330 disposée en série avec la résistance inerte 326 entre celle-ci et la paroi d'extrémité 312 de l'enceinte 311. Dans ce cas, et comme l'illustre la figure 7, la feuille de matériau fissile 324 est disposée à l'intérieur de la partie tubulaire de l'enceinte 310 en vis-à-vis de la résistance inerte 326, mais ne s'étend pas dans la partie radiale de l'enceinte 310 entourant la thermistance 330.

En raison de la loi de variation de la thermistance 330 en fonction de la température $\theta_0$ de l'enceinte 311, le montage de la figure 7 permet de réali-

B 6730-3 GP

ser une véritable correction des variations de cette température $\theta_0$, de telle sorte que la seule mesure de la résistance totale du fil 326 et de la thermistance 330 permet d'en déduire la puissance dissipée par le matériau fissile.

Bien entendu, l'invention n'est pas limitée aux différentes variantes qui viennent d'être décrites à titre d'exemple. En particulier, l'invention couvre tous les procédés de mesure d'un flux neutronique continu dans lesquels on déduit la puissance dégagée par la matière fissile de la mesure d'une différence de températures entre un matériau fissile placé dans le flux neutronique et un matériau inerte séparé du matériau fissile par un milieu intermédiaire dont la conductance thermique est connue, la mesure des deux températures ou de la différence de températures étant effectuée au moyen de résistances préalablement étalonnées ( la rapidité de réponse des appareils de mesure à résistance, tels que ceux qui viennent d'être décrits, est beaucoup plus grande que celle de la majorité des autres dispositifs de mesure de températures connus). Cependant, la configuration cylindrique des appareils de mesure décrits pourrait être remplacée par une configuration plane. Enfin, on peut utiliser tout dispositif électronique connu pour mesurer la valeur des résistances et pour corriger électroniquement les variations de la température ambiante $\theta_0$.

B 6730-3 GP

**0026126**

<u>REVENDICATIONS</u>

1. Procédé de mesure d'un flux neutronique continu, caractérisé en ce qu'il consiste :

- à disposer dans le flux neutronique une sonde (10, 110, 210, 310) comprenant une première partie définissant une enceinte (11, 111, 211, 311) et une seconde partie disposée à l'intérieur de l'enceinte et constituée par une résistance électrique (14, 126, 214, 326) préalablement étalonnée afin d'en connaître la variation en fonction de la température, la résistance électrique étant séparée de l'enceinte par un milieu (18, 118, 218) dont la conductance thermique est connue et l'une desdites parties (14, 111, 214, 311) étant réalisée au moins partiellement en matériau fissile alors que l'autre partie (11, 126, 211, 326) est réalisée en matériau inerte,

- à mesurer ladite résistance électrique pour connaître la température de la seconde partie et à mesurer la température de la première partie de la sonde, et

- à déduire de la différence des températures mesurée à l'équilibre entre les deux parties de la sonde et de la valeur correspondante de la conductance thermique du milieu la puissance dégagée en continu par la partie réalisée en matériau fissile.

2. Procédé selon la revendication 1, caractérisé en ce qu'une deuxième résistance électrique (228) préalablement étalonnée afin d'en connaître la variation en fonction de la température est connectée électriquement à l'enceinte (211) et décalée axialement par rapport au matériau fissile (214), de telle sorte que l'on mesure cette deuxième résistance pour connaître la température de l'enceinte.

B 6730-3 GP

3. Procédé selon la revendication 1, caractérisé en ce que l'on corrige les variations de températures de l'enceinte (311) en associant à la résistance électrique (326) un dispositif de correction, tel qu'une thermistance (330) sensible à la température de l'enceinte.

4. Appareil de mesure d'un flux neutronique selon le procédé de l'une quelconque des revendications précédentes, caractérisé en ce qu'il comprend une sonde (10, 110, 210, 310) comportant une première partie définissant une enceinte (11, 111, 211, 311) et une seconde partie disposée à l'intérieur de l'enceinte et constituée par une résistance électrique (14, 126, 214, 326), cette résistance étant séparée de l'enceinte par un milieu (18, 118, 218) dont la conductance thermique est connue, l'une desdites parties (14, 111, 214, 311) étant réalisée au moins partiellement en matériau fissile alors que l'autre partie (11, 126, 211, 326) est réalisée en matériau inerte, et des moyens (22, 122) pour mesurer la différence de températures entre les deux parties de la sonde, ces moyens comprenant des moyens pour mesurer la valeur de ladite résistance.

5. Appareil selon la revendication 4, caractérisé en ce que l'enceinte (11, 211) est réalisée en matériau inerte, la seconde partie de la sonde étant une résistance fissile (14, 214).

6. Appareil selon la revendication 4, caractérisé en ce que les parois internes de l'enceinte (111, 311) sont revêtues d'une feuille de matériau fissile (124, 324), la seconde partie de la sonde étant une résistance inerte (126, 326).

7. Appareil selon l'une quelconque des revendications 4 à 6, caractérisé en ce qu'une seconde résistance électrique inerte (228) est connectée électriquement à l'enceinte étanche (211) et décalée axiale-

B 6730-3 GP

ment par rapport au matériau fissile (214), les moyens pour mesurer la différence de températures entre les deux parties de la sonde comprenant de plus des moyens pour mesurer la valeur de la seconde résistance inerte.

8. Appareil selon l'une quelconque des revendications 4 à 6, caractérisé en ce qu'un dispositif de correction de température (330) est connecté électriquement entre la résistance électrique (326) et l'enceinte (311).

9. Appareil selon l'une quelconque des revendications 4 à 8, caractérisé en ce que l'enceinte (11, 111, 211, 311) est tubulaire, réalisée en un matériau bon conducteur de l'électricité et fermée à une extrémité par une paroi (12, 112, 212, 312) et à son autre extrémité par un câble coaxial (20, 120, 220, 320) relié électriquement aux moyens de mesure (22, 122), la résistance électrique (14, 126, 214, 326) étant filiforme, coaxiale à l'enceinte et connectée électriquement entre la paroi et le câble coaxial.

0026126

FIG.1

FIG.2

$\theta_{02} > \theta_{01} > \theta_0$

FIG.3

FIG.4

112 111 110 124 126 120

122

116 118

FIG. 5

212 211 214 218 210 228 220

FIG. 6

312 311 330 310 326 324 320

FIG. 7

### Office européen
### des brevets

## RAPPORT DE RECHERCHE EUROPEENNE

Numéro de la demande

EP 80 40 1267

| Catégorie | DOCUMENTS CONSIDERES COMME PERTINENTS | | |
|---|---|---|---|
| | Citation du document avec indication, en cas de besoin, des parties pertinentes | Revendication concernee | |
| X | DE - A - 1 764 145 (GESELLSCHAFT FUR KERNFORSCHUNG GmbH) <br><br> * Page 2, ligne 20 à page 3, ligne 14; page 4, lignes 9-18; page 6, lignes 1-15; revendications 1-3,8 * <br><br> -- | 1,3-5, 8,9 | |
| | US - A - 2 993 138 (H.T. SCOTT) <br><br> * Colonne 1, lignes 9-23; colonne 2, lignes 30-69; colonne 3, lignes 4-10; figures 1-4 * <br><br> -- | 1,4,5 | |
| | US - A - 3 163 759 (R.N. CORDY et al.) <br><br> * Colonne 1, lignes 10-13; colonne 2, lignes 6-64; colonne 3, lignes 19-32; figures 1-4 * <br><br> -- | 1,4,5, 9 | |
| | US - A - 3 226 547 (J.L. BLOOM) <br><br> * Colonne 1, lignes 10-13; colonne 2, ligne 51 à colonne 3, ligne 55; figure 1 * <br><br> -- | 1,4,5 | |
| | FR - A - 1 344 326 (COMMISSARIAT A L'ENERGIE ATOMIQUE) <br><br> * Page 1, colonne de gauche, lignes 1-8; page 2, colonne de gauche, ligne 46 à colonne de droite, ligne 18; figures 1,2 * <br><br> -- <br><br> ./. | 1,4,9 | |

**CLASSEMENT DE LA DEMANDE (Int. Cl. 3)**

G 01 T 3/04

**DOMAINES TECHNIQUES RECHERCHES (Int. Cl. 3)**

G 01 T 3/04

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interférence
D: document cite dans la demande
L: document cité pour d'autres raisons

&: membre de la même famille, document correspondant

Le present rapport de recherche a ete établi pour toutes les revendications

| Lieu de la recherche | Date d achevement de la recherche | Examinateur |
|---|---|---|
| La Haye | 23-12-1980 | VILLEMIN |

OEB Form 1503.1  06.78

Office européen
des brevets

**RAPPORT DE RECHERCHE EUROPEENNE**

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | |
| | FR - A - 1 354 110 (ELECTRICITE DE FRANCE)<br><br>* Page 2, colonne de gauche, lignes 17-35; page 2, colonne de droite, ligne 55 à page 3, colonne de droite, ligne 16; figure 1 *<br><br>-- | 1,4,9 | |
| | GB - A - 641 926 (THE MINISTER OF SUPPLY)<br><br>* Page 2, lignes 65-97; page 3, lignes 73-87; figures *<br><br>---- | 1,4,5,9 | |
| | | | DOMAINES TECHNIQUES RECHERCHES (Int. Cl. ³) |